# EUROPEAN PATENT SPECIFICATION

(11) **EP 1 368 436 B1**
(45) Date of publication and mention of the grant of the patent: **13.02.2008**
(21) Application number: 02706345.2
(22) Date of filing: 22.02.2002
(51) Int. Cl.: C09C 1/24

(54) **METHOD OF MAKING A PIGMENT DISPERSION CONTAINING A CARRIER SUCH AS CASTOR OIL OR A WAX**
VERFAHREN ZUR HERSTELLUNG EINER PIGMENTDISPERSION, WELCHE EINEN TRÄGER WIE Z.B. RIZINUSÖL ODER WACHS ENTHÄLT
PROCEDE DE FABRICATION D'UNE DISPERSION PIGMENTAIRE CONTENANT UN SUPPORT TEL QUE HUILE DE RICIN OU UNE CIRE

(30) Priority: 22.02.2001 US 270160
(43) Date of publication of application: 10.12.2003
(73) Proprietor: SUN CHEMICAL CORPORATION, Parsippany, NJ 07054-1285 (US)
(72) Inventor: ANANTHARAMAN, Kalpathy, R., Cincinnati, Ohio 45245 (US); LEWIS, Michael, K., Union, Kentucky 41091 (US); MALIYACKEL, Anthony, Mason, Ohio 45040 (US); GANGULY, Sanjoy, Fairfield, Ohio 45014 (US); SMITH, Marsha, Cincinnati, Ohio 45240 (US); BAUER, Allen, Madeira, Ohio 45243 (US); SMOOT, Marvin, Crittendon, Kentucky 41030 (US)
(74) Representative: Vossius & Partner
(86) International application number: PCT/US2002/005030
(87) International publication number: WO 2002/068542

(56) References cited:
- DE-A- 3 344 464
- GB-A- 2 218 106
- US-A- 3 996 059
- DATABASE WPI Section Ch, Week 199302 Derwent Publications Ltd., London, GB; Class A17, AN 1993-012761 XP002201394 & JP 04 339877 A (DAINIPPON INK & CHEM KK) , 26 November 1992 (1992-11-26)

## Description

This invention relates to a method for making a dispersion consisting essentially of at least one pigment and a carrier selected from castor oil and a wax, and an improved dispersion produced by the process. The viscosity of the resulting dispersion is sufficiently high to prevent separation, yet sufficiently low to ensure good flow properties, including pourability.

Pigment dispersions comprise at least one pigment intimately admixed within a carrier. Pigment dispersions have been made using batch processes based on slow mixers such as ball mills and three-roll mixers. These processes are inherently inefficient due to low throughput, long residence time, and recirculation of the material being processed. Moreover, these processes can produce a dispersion having an undesirably broad pigment particle size distribution. For maximum color strength, a narrow distribution of small sized pigment particles is required, since the color strength will be proportional to the surface area of the pigment present.

Castor oil-based pigment dispersions are used in the manufacture of lipstick. The castor oil serves to solubilize waxes and additives, and to provide a softness and smooth texture to the lipstick. The castor oil is conventionally mixed with a pigment using a two- or three-roll mill in a batch process. However, a high pigment loading (40% or more) is required to ensure high shear through the three-roll mill. The result is a very thick paste which is not pourable or pumpable, and which is believed to contain poorly-dispersed pigment particles having a broad particle size distribution. Subsequent addition of castor oil to reduce the viscosity of the paste can lead to eventual separation of the pigment from the castor oil. Moreover, the batch nature of the mixing method is inefficient.

Bead milling systems are commonly used to disperse both organic and inorganic pigments into aqueous systems such as water-based printing inks. See, for example, U.S. Patent No. 4,015,999. These bead mills use a closed grinding chamber containing an internal rotor. Steel, glass or zirconium beads or shot having a diameter of from 0.5 to 1.0 µm is mixed with the pigment, and produces high impact collisions with the pigment aggregates during mixing, thereby breaking the aggregates down into individual particles. See "Milling Equipment", The Printing Ink Manual § 13.4 (D.E. Bisset et al. eds., 4th ed. 1988).

U.S. Patent No. 5,8.85,739 discloses the use of sigma blade-equipped mixers to flush wet pigment presscakes to produce pigmented resins.

An object of the present invention is to provide an efficient, method for producing pigment dispersions which possess excellent color development.

A feature of the present invention is that the pigment particles dispersed in the carrier exhibit a narrow range of particle size distribution.

An advantage of the present invention is that the nature of the process permits higher throughput and lower cost than the batch processes of the prior art.

In one aspect, the present invention relates to a process for preparing a castor oil or wax-based dispersion, which consists essentially of effectively mixing for a time sufficient to uniformly disperse at least one pigment in the form of a dry powder or non-aqueous flush in a carrier selected from the group consisting of castor oil and a wax to produce a dispersion having a narrow range of particle size distribution.

The pigments which can be used to make the dispersion of the present invention include FC&C, D&C and inorganic pigments. Red Iron Oxide, Yellow. Iron Oxide, Black Iron Oxide, D&C Red No. 7, FD&C Blue No. 1, FD&C Yellow No. 5, FD&C Yellow No. 6, Phthalocyanine Blue, Rubine, Calcium Red 2B, Pigment Red No. 38, Pigment Orange No. 16, Yellow No. 14, titanium.dioxide and mixtures thereof are particularly preferred, and are commercially available.

The pigments are used in the form of a dry powder or a non-aqueous flush. A dry powder pigment presents dust problems, and is non-preferred. A non-aqueous flush can be used in this invention without any pretreatment.

The carrier of the present invention is a castor oil or a wax. A grade of castor oil which primarily contains the triglyceride of ricinoleic acid is preferred for use in this invention. It is characterized by a very low acid number of less than 10, and a high hydroxyl value of above 150. Castor oil having these characteristics is commercially available.

Waxes which may be suitable for use in the present invention include both natural waxes (animal, vegetable and mineral) and synthetic (ethylenic, chlorinated naphthalene and hydrocarbon type waxes obtained by Fischer-Tropsch synthesis). Mineral waxes such as earth waxes and petroleum waxes are preferred, with paraffin wax being especially preferred.

The pigment and carrier are effectively mixed together for a time sufficient to uniformly disperse the pigment in the carrier to produce a dispersion having a narrow range of particle size distribution. A conventional sigma blade mixer may be used to perform the mixing step using conventional techniques well known to those of ordinary skill in the art. If desired, a fatty acid such as stearic acid can be added to increase the dispersability of the pigment. The mixer is operated until the pigment particles are fully dispersed in the carrier.

The process of the present invention produces a dispersion of from 40. to 60% by weight of at least one pigment in 60 to 40 weight percent of a' carrier.

The pigment dispersions produced by this process have a room temperature viscosity of from 2 to 5,5 Pa·s (2,000 to 5,500 cps), preferably 2 to 4 Pa·s (2000 to 4000 cps), and are thus sufficiently fluid at room temperature to be pumpable and pourable. They are coloristically strong in comparison to pigment dispersions prepared by three-roll mixing, and are resistant to pigment settling over time.

### EXAMPLES

The practice and advantages of the present invention are disclosed in even greater detail in the following Examples, which are illustrative only, and not intended to limit the allowable scope of invention in any manner whatsoever.

### Example 1

### Formation of a Castor Oil-Based Dispersion

To a clean 0.038 m³ (10 gallon) sigma blade mixer was charged 7.7 kg (17 lbs) of CRYSTAL O castor oil, commercially available from CasChem, Inc., Bayonne, NJ. This castor oil is primarily composed of the triglyceride ester of ricinoleic acid, has an acid value of 2, an iodine (hydroxyl) value of 66, and a viscosity of 0.9 Pa·s (900 cps).

3.6 kg (8 pounds) of FC&C Yellow No. 5 pigment was added to the castor oil, and the charge was mixed for 15 minutes. An additional 1.8 kg (4 pounds) of FD&C Yellow No. 5 was added, and mixing continued for another 15 minutes. An additional 0.9 kg (2 pounds) of FD&C Yellow No. 5 was added, and mixing continued for another 15 minutes. A final 0.9 kg (two pounds) of FD&C Yellow No. 5 was added. Mixing was then continued for three hours until a uniform dispersion was obtained, as determined using a Hegman grind gage. An additional 1.36 kg (3 pounds) of castor oil was added in 0.23 (0.5.) increments followed by 10-15 minute mixing periods to obtain a final product containing 50 weight percent castor oil and 50% FD&C Yellow Pigment No. 5. The product had good coloristic strength and dispersion.

The above procedure was repeated using other commercially available pigments. Table 1 below lists the pigments and concentrations used.

**Table 1**

| **Dispersion** | **Pigment Type** | **Pigment weight Percentage** | **Castor Oil Weight Percentage** |
|---|---|---|---|
| I-1 | FD&C Yellow No. 5 | 50.0 | 50 |
| I-2 | Yellow Iron Oxide | 50.0 | 50 |
| I-3 | Black Iron Oxide | 50.0 | 50 |
| 1-4. | Titanium Dioxide | 50.0 | 50 |
| I-5 | FD&C Blue No. 1 | 45.0 | 55 |
| I-6 | Red Iron Oxide | 50.0 | 50 |
| I-7 | FD&C Yellow No. 6 | 50.0 | 50 |

### Example II (Comparative)

### Formation of Wax-Based Dispersion

To a clean 0.038 m³ (10 gallon) sigma blade mixer was charged 0.09 kg (0.20 lbs) of paraffin wax. The mixer was heated using its steam jacket to melt the wax. 0.17 kg (0.375 lbs) of stearic acid were added once the wax had melted. The 0.23 kg (0.5 lbs) (dry basis) of Rubine Red 57:1 presscake at 21.0% percent dry content were charged into the mixer, which.was operated for 10-15 minutes until the water broke, and was removed. An additional 0.23 kg (0.5 lbs) dry basis Rubine presscake an 0.17 kg (0.375 pounds) paraffin wax were charged to the mixer, which was then operated until the water broke and was removed. An additional 0.11 kg (0.25 lbs). (dry basis) Rubine presscake and 0.14 kg (0.30 lbs) paraffin wax were charged to the mixer, which was then operated until the water broke and was removed. The mixer was maintained at 80-85 °C during this flushing process.

The flushed presscake is washed with water, dried under vacuum at 98-100°C, and cooled to give a good dispersion.

The procedure of Example 2 was repeated using other commercially available pigments. Table 2 below lists the pigments and concentrations used.

**Table 2**

| Dispersion | Pigment Type | Pigment Weight | Paraffin Wax | Stearic Acid |
|---|---|---|---|---|
| II-1 | Rubine Presscake | 50% | 35% | 15% |
| II-2 ' | Phthalocynine Presscake | 50% | 35% | 15% |
| II-3 | Pigment Orange 16 Presscake | 50% | 35% | 15% |
| II-4 | Pigment Yellow 14 Presscake | 50% | 35% | 15% |
| II-5 | Calcium Red 2B Presscake | 50% . | 35% | 15% |
| II-6 | Pigment Red Powder | 50% | 35% | 15% |

## Claims

1. A process for preparing a castor oil or wax-based dispersion, which consists essentially of effectively mixing for a time sufficient to uniformly disperse at least one pigment in the form of a dry powder or non-aqueous flush in a carrier selected from the group consisting of a castor oil and a wax to produce a dispersion having a narrow range of particle size distribution.

2. The process of claim 1, wherein said pigment is at least one member of the group consisting of Red Iron Oxide, Yellow Iron Oxide, Black Iron Oxide, D&C Red No. 7, FD&C Blue No. 1, FD&C Yellow No. 5, FD&C Yellow No. 6, Phthalocyanine Blue, Rubine, Calcium Red 2B, Pigment Red No. 38, Pigment Orange No. 16, Yellow No. 14, titanium dioxide and mixtures thereof.

3. The process of claim 1 or 2, wherein said carrier is castor oil.

4. The process of claim 1 or 2, wherein said carrier is a wax.

5. The process of claim 4, wherein said wax comprises paraffin wax.

6. The process of any one of claims 1 to 5, wherein a sigma blade mixer is used to mix said pigment and said carrier.

7. The process of any one of claims 1 to 6, wherein the pigment is in the form of a non-aqueous flush.

8. A pumpable and pourable fluid dispersion produced by the process of any one of claims 1 to 7.

## Patentansprüche

1. Verfahren zur Herstellung einer Dispersion auf Rizinusöl- oder Wachsbasis, im Wesentlichen bestehend aus effektivem Mischen über eine ausreichende Zeit, um mindestens ein Pigment in Form eines trockenen Pulvers oder eines nicht-wässrigen Flushs gleichmäßig in einem Träger aus der Gruppe, die aus einem Rizinusöl und einem Wachs besteht, dispergiert wird, so dass eine Dispersion mit einer engen Teilchengrößenverteilung erzeugt wird.

2. Verfahren nach Anspruch 1, wobei das Pigment mindestens eines aus der Gruppe Eisenoxid-Rot, Eisenoxid-Gelb, Eisenoxid-Schwarz, D&C Rot Nr. 7, FD&C Blau Nr. 1, FD&C Gelb Nr. 5, FD&C Gelb Nr. 6, Phthalocyanin-Blau, Rubin, Calcium-Rot 2B, Pigment-Rot Nr. 38, Pigment-Orange Nr. 16, Gelb Nr. 14, Titandioxid und Gemischen davon ist.

3. Verfahren nach Anspruch 1 oder 2, wobei der Träger Rizinusöl ist.

4. Verfahren nach Anspruch 1 oder 2, wobei der Träger ein Wachs ist.

5. Verfahren nach Anspruch 4, wobei das Wachs Paraffinwachs umfasst.

6. Verfahren nach einem der Ansprüche 1 bis 5, wobei ein Sigmablatt-Mischer zum Mischen des Pigments und des Trägers verwendet wird.

7. Verfahren nach einem der Ansprüche 1 bis 6, wobei das Pigment in Form eines nicht-wässrigen Flushs vorliegt.

8. Pump- und gießfähige Fluiddispersion, hergestellt durch das Verfahren nach einem der Ansprüche 1 bis 7.

## Revendications

1. Un procédé pour préparer une dispersion à base d'huile de ricin ou de cire qui consiste notamment à malaxer efficacement au moins un pigment sous forme de poudre sèche ou d'une préparation de pigments prédispersés non aqueuse pendant une durée suffisante pour le disperser uniformément dans un véhicule sélectionné parmi le groupe comprenant l'huile de ricin et une cire de façon à produire une dispersion présentant un intervalle de distribution granulométrique étroit.

2. Le procédé de la revendication 1, dans lequel ledit pigment est au moins un élément du groupe comprenant l'oxyde de fer rouge, l'oxyde de fer jaune, l'oxyde de fer noir, le rouge DC no. 7 (D&C Red No. 7), bleu brillant FCF (E₁₃₃ ou bleu FDC no. 1), la tartrazine (E₁₀₂ ou jaune FDC no. 5), le jaune orangé S (E₁₁₀ ou jaune FDC no. 6), le bleu de phtalocyanine, le pigment rubis, le rouge de calcium 2B, le pigment rouge no. 38, le pigment orange no. 16, le pigment jaune no. 14, le dioxyde de titane et leurs mélanges.

3. Le procédé de la revendication 1 ou 2, dans lequel le véhicule est une huile de ricin.

4. Le procédé de la revendication 1 ou 2, dans lequel le véhicule est une cire.

5. Le procédé de la revendication 4, dans lequel ladite cire comprend la cire de paraffine.

6. Le procédé de l'une quelconque des revendications 1 à 5, dans lequel le pigment et le véhicule sont malaxés avec un malaxeur à lames sigma.

7. Le procédé de l'une quelconque des revendications 1 à 6, dans lequel le pigment est sous forme d'une préparation de pigments prédispersés non aqueuse.

8. Une dispersion de fluide susceptible d'être pompée et coulée, ladite dispersion étant préparée selon le procédé de l'une quelconque des revendications 1 à 7.
